# EUROPEAN PATENT SPECIFICATION

(11) **EP 2 239 449 B1**
(45) Date of publication and mention of the grant of the patent: **30.09.2015**
(21) Application number: 10002809.1
(22) Date of filing: 17.03.2010
(51) Int. Cl.: F02K 1/09, F02K 1/72

(54) **Nacelle assembly for turbofan aircraft engines**
Gondelanordnung für Mantelstromtriebwerke von Flugzeugen
Ensemble de nacelle pour moteurs d'avion à réacteur à double flux

(30) Priority: 06.04.2009 US 419080
(43) Date of publication of application: 13.10.2010
(73) Proprietor: Rohr, Inc., Chula Vista, CA 91910-2098 (US)
(72) Inventor: Wang, Shunshen Richard, California 91911 (US)
(74) Representative: Leckey, David Herbert

(56) References cited:
- WO-A2-2009/029401
- US-A- 4 407 120
- US-A- 4 922 713

## Description

### TECHNICAL FIELD

The present invention generally relates to gas turbine aircraft engines, and particularly relates to a translating variable area nozzle assembly for a turbofan aircraft engine for use in selectively controlling the fan bypass flow exhausted from the engine in order to adjust the engine's performance under varying flight conditions.

### BACKGROUND

Typical aircraft turbofan jet engines include a fan that draws and directs a flow of air into a nacelle and into and around an engine core. The nacelle surrounds the engine core and helps promote the laminar flow of air around the core. The flow of air that is directed into the engine core is initially passed through a compressor that increases the air flow pressure, and then through a combustor where the air is mixed with fuel and ignited. The combustion of the fuel and air mixture causes a series of turbine blades at the rear of the engine core to rotate, and to drive the engine's rotor and fan. The high-pressure exhaust gases from the combustion of the fuel and air mixture are thereafter directed through an exhaust nozzle at the rear of the engine.

Bypass flow is air that is directed around the engine core. In turbofan engines, the bypass flow typically provides the main thrust for an aircraft. The bypass flow also can be used to help slow a landed aircraft. Thrust reversers mounted in the nacelle structure selectively reverse the direction of the bypass flow to generate reverse thrust. During normal engine operation, the bypass flow may or may not be mixed with the engine core exhaust before exiting the engine assembly.

Several turbofan engine parameters are important to optimize design characteristics and performance. An engine's bypass ratio (BPR) is the ratio of the air mass that passes through the engine's fan duct to that passing through the engine core.

Higher BPR engines can be more efficient and quiet than lower BPR engines. In general, a higher BPR results in lower average exhaust velocities and less jet noise at a specific thrust rating. A turbofan engine's performance is also affected by the engine's fan pressure ratio (FPR). FPR is the ratio of the air pressure at the engine's fan nozzle exit to the pressure of the air entering the fan. The lower the FPR, the lower the exhaust velocity, and the higher an engine's propulsive efficiency. Reducing an engine's FPR can reach a practical limit, however, as a low FPR can cause engine fan stall, blade flutter or compressor surge under certain operating conditions.

One solution to these problems includes varying the fan nozzle exit area of a high-BPR engine during operation to optimize engine performance under various flight conditions. By selectively varying the fan nozzle's exit area, an engine's bypass flow characteristics can be adjusted to match a particular flight condition. Unfortunately, prior variable area nozzle systems typically have been heavy, expensive and somewhat complex in their structure and operation, and generally require the coordinated movement of multiple components that employ complex drive mechanisms. WO 2009/029401 discloses a variable area van nozzle assembly with a translating ring assembly, the trailing edge of which defines the nozzle area. Translation of the ring creates an upstream exit at a leading edge of the ring assembly. The exit may be used to bleed air from the engine bypass duct.

Accordingly, a need exists for a variable area nozzle assembly for turbofan aircraft engine that promotes a cost effective, simple and efficient operation for control of engine output under certain flight conditions.

### SUMMARY

According to a first aspect of the invention, there is provided a nacelle assembly for a turbofan aircraft engine having an engine centerline, the nacelle assembly comprising: (a) a stationary forward nacelle portion having an outer fairing and a trailing edge; (b) a translatable variable area fan nozzle comprising two or more nozzle segments, each nozzle segment having first and second opposed ends and a leading edge that outwardly and rearwardly slopes at a first angle with respect to the engine centerline, the fan nozzle being selectively movable between a stowed position and one or more deployed positions, wherein in the deployed position, an upstream bypass flow exit is formed between the trailing edge and the leading edge; and (c) a split beavertail fairing comprising an upstream fairing portion on the outer fairing and a downstream fairing portion on at least one end of at least one nozzle segment; (d) wherein when the at least one nozzle segment is in the stowed position, the upstream fairing portion and the downstream fairing portion combine to form a substantially continuous outer surface extending between the outer fairing and the at least one nozzle segment; and (e) wherein when the at least one nozzle segment is in the deployed position, the upstream fairing portion and the downstream fairing portion define a substantially rearwardly extending elongated gap therebetween, the elongated gap being inclined with respect to the engine centerline at a second angle which is different to the first angle.

According to a second aspect of the invention there is provided a nacelle assembly for a turbofan aircraft engine having a centerline, the nacelle assembly comprising: (a) a stationary forward nacelle portion; (b) a thrust reverser comprising a translatable sleeve having an outer fairing and a trailing edge, the translatable sleeve being movably disposed aft of the stationary forward nacelle portion; (c) a translatable variable area fan nozzle comprising two or more nozzle segments, each nozzle segment having first and second opposed ends and a leading edge that outwardly and rearwardly slopes at a first angle with respect to the engine centerline, the fan nozzle being selectively moveable between a stowed position and one or more deployed positions, wherein in the deployed position, an upstream bypass flow exit is formed between the trailing edge and the leading edge; and (d) a split beavertail fairing comprising an upstream fairing portion on the outer fairing and a downstream fairing portion on at least one end of at least one nozzle segment; (e) wherein when the at least one nozzle segment is in the stowed position, the upstream fairing portion and the downstream fairing portion combine to form a substantially continuous outer surface extending between the outer fairing and the at least one nozzle segment; and (f) wherein when the at least one nozzle segment is in the deployed position, the upstream fairing portion and the downstream fairing portion define a substantially rearwardly extending elongated gap therebetween, characterized by the elongated gap being inclined with-respect to the engine centerline at a second angle which is different to the first angle.

A nacelle assembly includes a first portion having an outer fairing and a trailing edge, and a translatable variable area fan nozzle. The fan nozzle includes two or more nozzle segments, each nozzle segment having first and second opposed ends and a leading edge. The nozzle segments are selectively movable between a stowed position and one or more deployed positions. In the deployed position, an upstream bypass flow exit is formed between the trailing edge and the leading edge. The nacelle assembly further includes a guide mechanism for guiding the nozzle segments between the stowed position and the deployed position. A split beavertail fairing shields the guide mechanism against air flow when the nozzle segments are in the stowed position.

These and other features, aspects, and advantages of the invention will be apparent from a reading of the following detailed description together with the accompanying drawings, which are briefly described below.

### BRIEF DESCRIPTION OF THE DRAWINGS

According to common practice, the various features of the drawings discussed below are not necessarily drawn to scale. Dimensions of various features and elements in the drawings may be expanded or reduced to more clearly illustrate the embodiments of the invention.

**FIG. 1** is a perspective view of an aircraft engine having a cascade-type thrust reverser and a translating variable area fan nozzle assembly.

**FIG. 2** is a longitudinal cross section of the aircraft engine shown in FIG.1.

**FIG. 3** is a rear elevation view of the aircraft engine shown in FIGS. 1-2.

**FIG. 4** is a perspective view of the thrust reverser and translating variable fan area nozzle assembly portions of the aircraft engine shown in FIGS. 1-3 with a thrust reverser sleeve in a stowed position, and a variable area fan nozzle in a deployed position.

**FIG. 5** is a perspective view of the thrust reverser and translating variable area fan nozzle assembly shown in FIG. 4 with both the thrust reverser sleeve and the variable area fan nozzle in deployed positions.

**FIG. 6** is an exploded perspective view of the thrust reverser and translating variable area fan nozzle assembly shown in FIGS. 4-5.

**FIG. 7** is a cross sectional view of a guide structure for movably supporting a thrust reverser sleeve and a variable area fan nozzle.

**FIG. 8** is a cross sectional view of the thrust reverser and variable area nozzle assembly shown in FIGS. 1-6.

**FIG. 9A** is a perspective view of a variable area fan nozzle assembly for use with an aircraft engine having no cascade-type thrust reverser with a translating nozzle in a stowed position.

**FIG. 9B** is a perspective view of the variable area fan nozzle assembly shown in FIG. 9A with the translating nozzle in a deployed position.

**FIG. 10** is a perspective view of a portion of the variable area fan nozzle assembly shown in FIGS. 9A-9B with the translating nozzle in a deployed position.

**FIG. 11** is a side elevation view of a portion of the variable area fan nozzle assembly shown in FIGS. 9A-9B with the translating nozzle in a deployed position.

**FIG. 12** is a side elevation view of one embodiment of a split fairing for use with a translating variable area fan nozzle like that shown in FIGS. 1-6 and 9A-11.

**FIG. 13** is another side elevation view of the split fairing shown in FIG. 12.

**FIG. 14** is a side elevation view of a split fairing, not falling within the scope of the claims, for use with a translating variable area fan nozzle like that shown in FIGS. 1-6 and 9A-11 with the translating variable area fan nozzle sleeve in a deployed position.

**FIG. 15** is another side elevation view the split fairing shown in FIG. 14.

**FIG. 16** is a perspective view of the split fairing shown in FIGS. 14-15.

### DETAILED DESCRIPTION

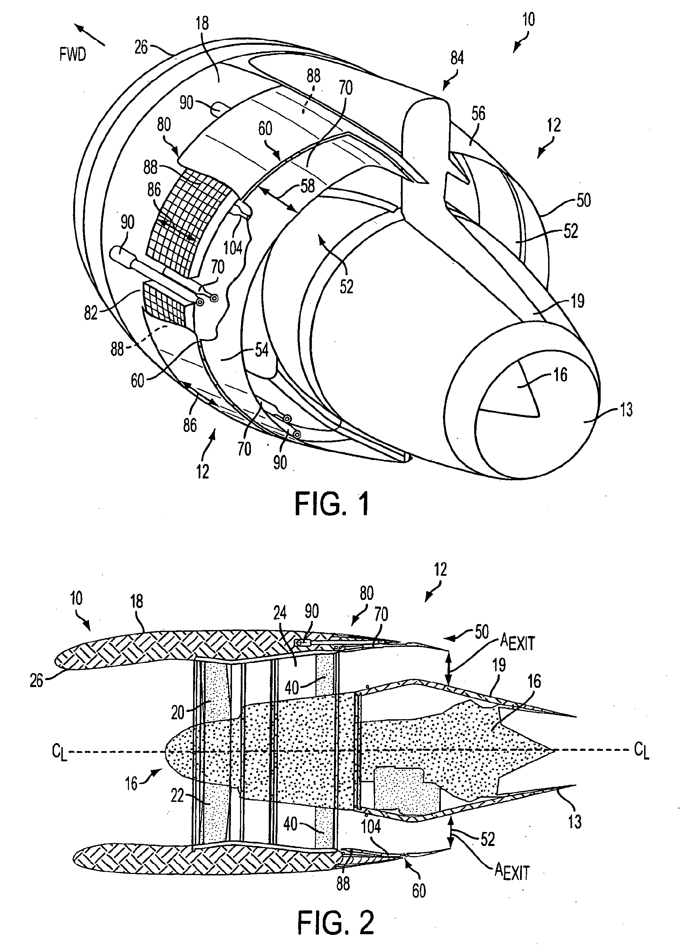

**FIGS. 1-8** show one embodiment of a translating variable area fan nozzle assembly (VAFN) for a turbofan engine **10.**

Referring to **FIGS. 1** and **2****,** the engine **10** includes a trailing edge fan nozzle assembly **12** having a translating nozzle **50** that can be selectively adjusted, for example, as the engine **10** operates under different flight conditions. As discussed above, such an adjustment can be used to optimize an engine's performance. As shown in **FIG. 2****,** the translating nozzle **50** can be selectively translated (i.e., moved fore and aft) to vary the fan nozzle's exit area "Aₑₓᵢₜ" in order to optimize engine performance, and as described in detail below, to adjust an amount of engine bypass flow spilled through an upstream exit **60** formed by the variable area fan nozzle assembly **12.** By bleeding or spilling off excess fan flow through the upstream exit **60** before the excess air flow reaches the primary fan nozzle exit **52,** lower fan pressure ratios for the same amount of delivered mass flow can be obtained, thereby increasing stall margins and avoiding engine malfunction and shutdown. For purposes of illustration, the variable area fan nozzle assembly **12** is shown in the context of a turbofan jet aircraft engine **10.** The engine **10** can be mounted to a wing or fuselage of an aircraft, for example, by a pylon or other similar support (not shown in the figures).

As shown in **FIG. 2****,** the engine **10** includes an engine core **16** and a stationary nacelle **18** surrounding the core **16.** The engine core **16** is housed within a core cowl **19.** The engine's fan **20** is positioned within an upstream portion of the nacelle **18,** and includes a plurality of fan blades **22** that are mounted on the engine's rotor (not shown). The fan blades **22** rotate about the engine's centerline **C_{L}** and draw a flow of air into an inlet end **26** of the engine **10.** An annular bypass duct **24** is defined between the engine core **16** and the nacelle **18.** The air flow drawn into the engine **10** is accelerated by the rotating fan blades **22,** and a portion of the incoming air flow is directed into and through the engine core **16.**

Bypass flow enters the upstream end of the nacelle **18** and flows around and past the engine core **16.** The bypass flow is accelerated by the rotating fan blades **22** and passes through the bypass duct **24** and past stators **40,** and exits the engine **10** through the variable area fan nozzle assembly **12.** The high-pressure heated exhaust gases from the combustion of the fuel and air mixture exit the engine core **16** through a primary exhaust nozzle **13** at the aft end of the engine **10.**

In the engine assembly **10** shown in **FIGS. 1-8****,** the translating nozzle **50** is a nozzle-like annular airfoil structure mounted at the trailing end of a cascade-type thrust reverser **80** that circumscribes the engine core cowl **19** immediately aft of the nacelle **18.** As shown in **FIG. 2****,** a downstream nozzle exit **52** between the trailing edge of the fan nozzle **50** and the core cowl **19** defines a fan nozzle exit area "**Aₑₓᵢₜ**". Due to the longitudinal variations in the diameter of the core cowl **19,** selective fore and aft movement of the translating nozzle **50** changes the size of the fan nozzle exit area **Aₑₓᵢₜ**. As shown in **FIG. 1****,** the fan nozzle **50** can include a first arcuate nozzle section **54** and a second arcuate nozzle section **56,** each nozzle section **54, 56** being axially translatable in the direction of the bidirectional arrow **58.** Translation of the translating nozzle **50** effects a desired size of the upstream exit **60** (shown in **FIG. 2****),** and also varies the outlet geometry and effective exit area **Aₑₓᵢₜ** of the downstream nozzle exit **52.** Hence, when the translating nozzle **50** is deployed, there is an increase in the bypass flow that is discharged from the engine assembly **10** through both the upstream exit **60** and the enlarged downstream nozzle exit **52.** As shown in **FIGS. 1-3****,** the translating nozzle **50** can be selectively translated fore and aft by a plurality of linear nozzle actuators **70,** for example.

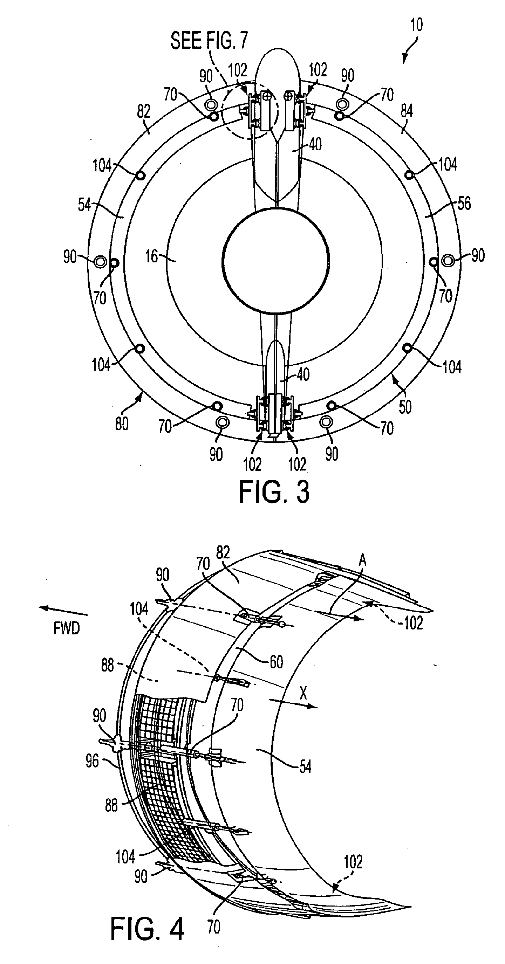

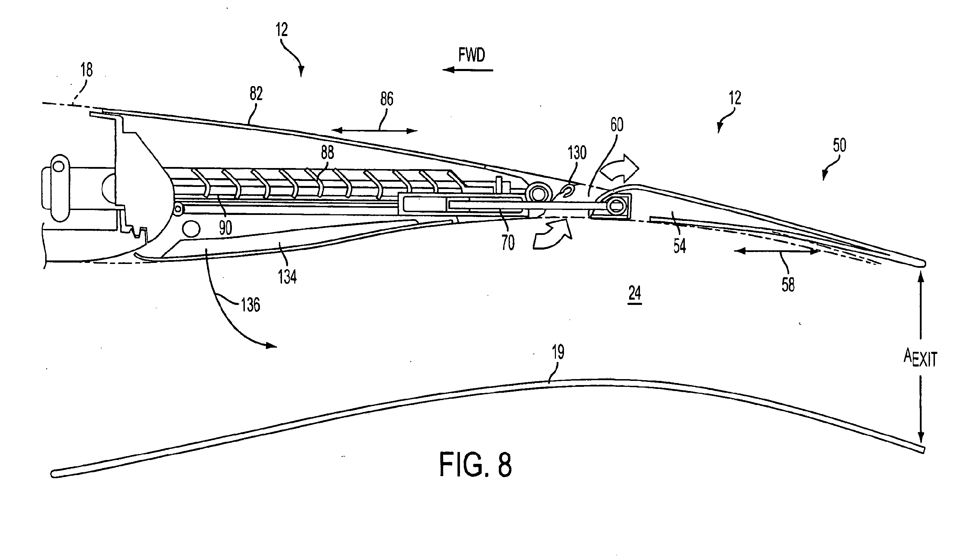

The cascade-type thrust reverser **80** can be positioned forward of the translating nozzle **50** in order to selectively block and redirect bypass flow from the bypass duct **24** in a manner known in the art. In **FIG. 1****,** the thrust reverser **80** and the translating nozzle **50** are both in their stowed positions. As shown in **FIG. 1****,** the thrust reverser **80** can include a first arcuate sleeve section **82** and an opposed second arcuate sleeve section **84** (shown in **FIG. 3****).** As indicated by bi-directional arrow **86** in **FIG. 1****,** the thrust reverser sleeve sections **82, 84** can be translated in the fore and aft directions by a plurality of spaced sleeve actuators **90.** In a stowed position, the thrust reverser sleeve sections **82, 84** cover an array of cascade vanes **88.** The cascade vanes **88** are indicated by dashed lead lines in **FIG 1** because they are not visible when the thrust reverser **80** is in its stowed position. Axial translation of the thrust reverser sleeve sections **82, 84** in the aft direction to a deployed position and deployment of a series of blocker doors **134** within the bypass duct **24** (as indicated by arrow **136** in **FIG. 8****)** causes bypass air flow to exit the bypass duct **24** through the cascade vanes **88** which turn the exiting flow in a generally forward direction to create reverse thrust.

**FIG. 3** is a partial section view of the aft end of the engine **10,** and illustrates one arrangement of the nozzle and sleeve actuators **70, 90,** respectively, around the periphery of the engine **10.** As shown in **FIG. 1****,** and more clearly in **FIG. 3****,** the sleeve half section **82** and the nozzle half-section **54** cooperate to generally define an approximately 180-degree sector of the combined thrust reverser and translating nozzle structure. Likewise, sleeve half section **84** and nozzle half section **56** cooperate to generally define an opposed approximately 180-degree sector of the thrust reverser and translating nozzle structure. Together, these approximate 180-degree sectors cooperate to define the complete thrust reverser/translating nozzle structure.

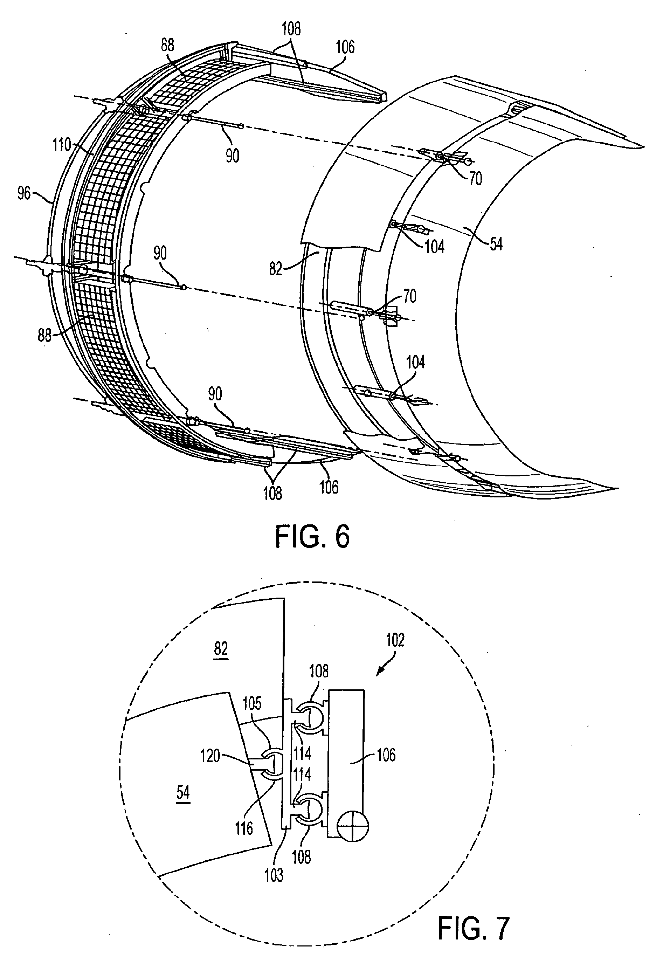

As shown in **FIGS. 1-3****,** the thrust reverser sleeve sections **82, 84** can each be selectively translated in the fore and aft directions by one or more circumferentially spaced sleeve actuators **90** that are connected to the nacelle **18.** In the embodiment shown, three actuators **90** are used for each sleeve half-section **82, 84.** As discussed above, each section **54, 56** of the translating nozzle **50** can be selectively translated by one or more circumferentially spaced nozzle actuators **70.** In the embodiment shown, each nozzle actuator **70** is disposed between a thrust reverser sleeve section **82, 84** and a respective fan nozzle section **54, 56.** The sleeve actuators **90** and the nozzle actuators **70** can be electrical, mechanical, pneumatic, hydraulic, or the like, and can be interconnected by appropriate power cables and conduits (not shown). The number and arrangement of nozzle and sleeve actuators **70, 90** can vary according to the thrust reverser and nozzle assembly configurations or other factors. As shown in **FIG. 3****,** the nozzle sections **54, 56** can be movably mounted on the engine **10** by upper and lower guide structures **102.** **FIG. 7** shows a detail view of one embodiment of a guide structure **102.** As shown in **FIGS. 1**-**3****,** guide tubes **104** can be mounted to the nacelle **18,** and can extend into the nozzle sections **54, 56** to stabilize the nozzle sections **54, 56** against undesirable translation and/or vibration. The guide tubes 104 can each include an elongated slider 271 that translates within the tube (not shown in the figures), for example.

The translating nozzle **50** can be a continuous nozzle (not shown in the figures), or as shown in **FIG. 3****,** can include two or more arcuate nozzle sections having airfoil profiles. The upstream exit **60** shown in **FIG. 2** is formed when the translating nozzle **50** is deployed in the aft direction away from the thrust reverser sleeve sections **82, 84,** and can have the form of a generally circular annular gap. Alternatively, the upstream exit 60 can have other non-circular shapes. The gap **60** between the nozzle sections **54, 56** and the sleeve sections **82, 84** can be continuous, or can be interrupted at one or more locations, such as, for example, at points of separation between nozzle segments **54, 56** of the translating nozzle **50.** As shown in **FIGS. 2-3****,** the bypass duct **24** can be interrupted at one or more locations by one or more stators **40,** or the like.

The translating nozzle **50** and surrounding structure are described below with reference to **FIGS. 4-7****.** In **FIGS. 4-7****,** elements that are obscured or partially obscured due to intervening elements are indicated by dashed lead lines.

**FIG. 4** is a partial view of one embodiment of a mounting structure for a first nozzle section **54** of the translating nozzle **50** and the corresponding, adjacent first sleeve section **82** of the thrust reverser **80.** The second nozzle section **56** of the translating nozzle 50 and the second sleeve section **84** of the thrust reverser 80, which are shown in **FIGS. 1** and **3****,** can be mounted in a similar manner (not shown). In **FIG. 4****,** the thrust reverser **80** is in a stowed position, and the first sleeve section **84** covers an associated portion of the cascade vanes **88.** Also in **FIG. 4****,** the translating nozzle **50** is in an open or deployed position, and the upstream exit **60** is disposed between the first nozzle section **54** and the first sleeve section **84.** Rearward axial translation of the first nozzle section **54** from its stowed position to its deployed position is indicated in **FIGS. 4-5** by directional arrow "X". As shown in **FIG. 4****,** the nozzle actuators **70** can extend from the sleeve section **82** and across the upstream exit **60,** and can connect to a forward portion of the nozzle section **54.** The guide tubes **104** can also extend from the sleeve section **82** and across the upstream exit **60,** and can connect to a forward portion of the nozzle section **54.** A flexible shaft **96** can interconnect two or more of the sleeve actuators **90** to power the actuators **90,** and/or to synchronize actuation of two or more actuators **90.**

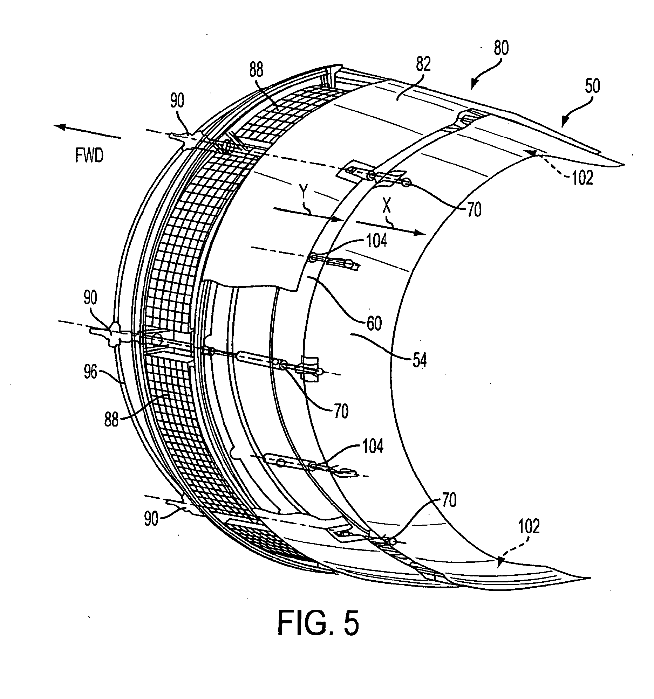

**FIG. 5** shows the first thrust reverser sleeve section **82** and the first translating nozzle section **54** in their deployed positions. Rearward axial translation of the first sleeve section **82** from its stowed position (as shown in **FIG. 4****)** to its deployed position (as shown in **FIG. 5****)** is indicated in **FIG. 5** by directional arrow "Y". Rearward translation of the sleeve section **82** exposes the cascade vanes **88** during operation of the thrust reverser **80.**

**FIG. 6** is an exploded view showing the first sleeve section **82** and its corresponding first nozzle section **54** separated from the cascades **88** and sleeve actuators **90.** As shown in **FIG. 6****,** one or more nozzle actuators **70** can movably connect the nozzle section **54** to the thrust reverser sleeve section **82.**

**FIG. 7** shows one embodiment of the upper or lower guide structures **102** for movably connecting a thrust reverser segment **82** and a nozzle section **54** to an engine **10.** Referring generally to **FIGS. 3** and **6** and particularly to **FIG. 7****,** the guide structure **102** can include a beam **106** that can be fixedly attached to a transverse bulkhead **110** on an aft end of a nacelle **18.** The beam **106** can include one or more longitudinally extending guide tracks **108.** A slide **103** can include one or more longitudinally extending track bars **114** that are slidably received within the guide tracks **108** of the fixed beam **106.** The slide **103** is connected to the thrust reverser sleeve section **82,** and thereby slidably connects the sleeve section to the beam **106.** The slide **103** can also include an axially extending track guide **116** in which a translating nozzle track bar **120** on the nozzle section **54** is slidably received, thus slidably connecting the nozzle section **54** to the nacelle **18.** Accordingly, the nozzle section **54** can axially translate as the track bar **120** slides within the track guide **116.** The nozzle section **54** is thereby slidably mounted with respect to the sleeve section **82** of the thrust reverser **80.** The translating sleeve section **82** and the track bar **120** can be actuated through conventional actuation means, such as mechanical, electric, hydraulic or pneumatic or other equivalent actuators, for example.

**FIG. 8** illustrates one method of operating the nozzle section **54** to bleed or spill off excess bypass flow through the upstream exit **60.** As described above, the sizes of the upstream exit **60** and the nozzle exit area **Aₑₓᵢₜ** can be varied in order to achieve different engine operating conditions. The upstream exit **60** acts as a "bleed" exit that diverts at least some bypass flow from the bypass duct **24.** **FIG. 8** shows a partial section of a downstream portion of the nozzle assembly **12,** and shows a portion of the bypass air flow (indicated by curved arrows) exiting the bypass duct **24** through the annular upstream exit **60** in one mode of operation of the nozzle assembly **12.** In **FIG. 8****,** the first nozzle section **54** of the translating nozzle **50** is rearwardly displaced from the first thrust reverser sleeve section **82** by its associated nozzle actuators **70.** The second nozzle section **56** can be similarly and simultaneously rearwardly displaced from the second thrust reverser sleeve section **84** by its associated nozzle actuators **70.** As shown in **FIG. 8****,** the thrust reverser **80** can include a plurality of blocker doors **134** that are pivotally connected to the first sleeve section **82** and swing in the direction of the curved arrow **136** to selectively block and redirect the bypass flow from the bypass duct **24** and through the cascade vanes **88** during thrust reverser operation.

Still referring to **FIG. 8****,** a high pressure seal **130** can be disposed between the thrust reverser sleeve section **82** and the first nozzle section **54,** such as on the trailing edge of the sleeve section **82,** for example. In certain modes of operation, when the sleeve section **82** and nozzle section **54** are drawn together, the seal **130** can operate to substantially seal any gap between the adjacent sleeve section **82** and nozzle section **54,** and thereby substantially prevent bypass air flow from passing between the sleeve section **82** and nozzle section **54.** Similarly, a seal **130** can be disposed between the second thrust reverser sleeve section **84** and the second nozzle section **56.** Alternatively, the seal **130** can be mounted on the leading edges of the nozzle sections **54,** 56, for example.

As discussed above, the nozzle and sleeve actuators **90, 70** can be mechanical, hydraulic, pneumatic or electric actuators, for example. In one embodiment, the nozzle actuator **70** is a constant opening air spring damper with hydraulic closing override, and the sleeve actuator **90** is an electric actuator. Alternatively or in addition, one or more of the actuators **70, 90** can be like an actuator described in U.S. Pat. No. 7,174,828 or in U.S. Pat. Application Publication No. 2008/0084130A1, both assigned to Goodrich Actuation Systems Ltd., for example, the disclosures of which are hereby incorporated by reference.

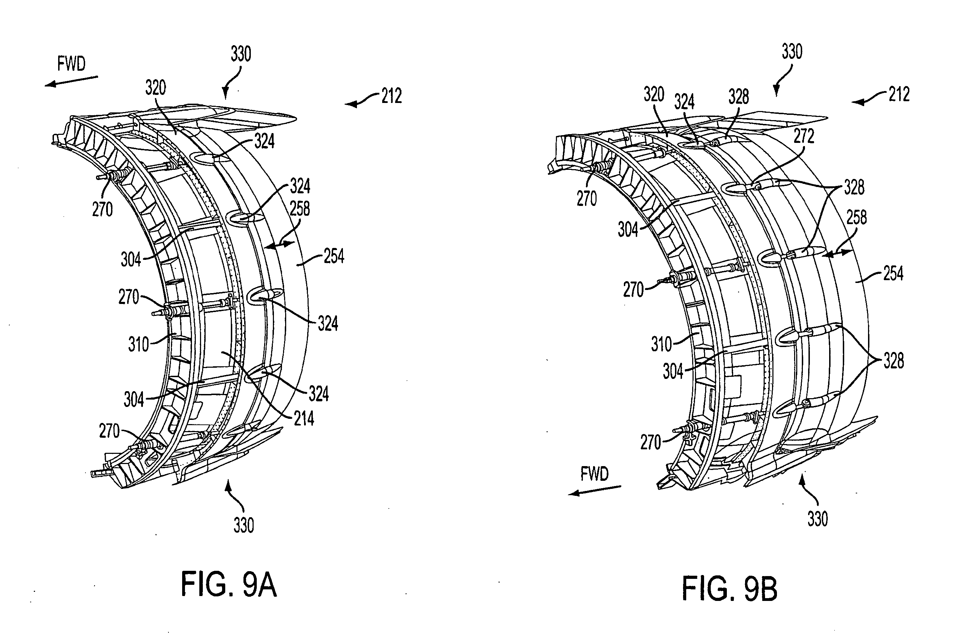

**FIGS. 9A-11** show a variable area nozzle assembly **212** for a turbofan engine having no cascade-type thrust reverser. The nozzle assembly **212** can be mounted to a nacelle **18** as generally illustrated in **FIG. 1****,** but with no intervening thrust reverser. Generally, elements shown in **FIG. 9A-11** that are analogous to elements shown in **FIGS. 1-8** have similar reference numerals preceded by a **"2"** or **"3."**

**FIGS. 9A** and **9B** are partial cutaway illustrations of a variable area nozzle assembly **212.** In the cutaway illustrations, a transverse bulkhead **310** and an outer duct structural liner **214** of an associated stationary nacelle are visible. The nozzle assembly **212** includes a translating nozzle assembly that includes two opposed nozzle sections, of which one nozzle section **254** is shown in **FIGS. 9A** and **9B****.** In **FIG. 9A****,** the nozzle section **254** is in a closed or stowed position, and in FIG. 9B, the nozzle section 254 is in an open or deployed position.

The nozzle section **254** is mounted on the aft end of a stationary nacelle structure, such as to a transverse bulkhead **310.** Peripherally spaced nozzle actuators **270** can be attached to the bulkhead **310** at one end, and attached to a nozzle section **254** at their opposite ends. Guide tubes **304** can also be attached to the transverse bulkhead **310** at one end, and attached to a bulkhead **311** of the nozzle section **254** at their opposite ends. As shown in Fig. 9B, the aft ends of sliders **271** that are slidably received within the tubes **304** can be attached to the nozzle section **254.** The nozzle actuators **270** can act in unison to translate the nozzle section **254** in the direction of the bidirectional arrow **258.** Referring to **FIG. 9B**, actuator shafts **272** of the nozzle actuators **270** can pass through an outer fairing **320** located forward of the nozzle section **254.** Upstream fairing **324** can be provided at the points where the actuator shafts **272** and the guide tube sliders **271** pass through the outer fairing **320** in order to reduce drag induced by the actuators **270** and guide tube assemblies **304.** Similarly, downstream fairing **328** can be provided at the points where the actuator shafts **272** and guide tube sliders **271** pass through the nozzle section **254.**

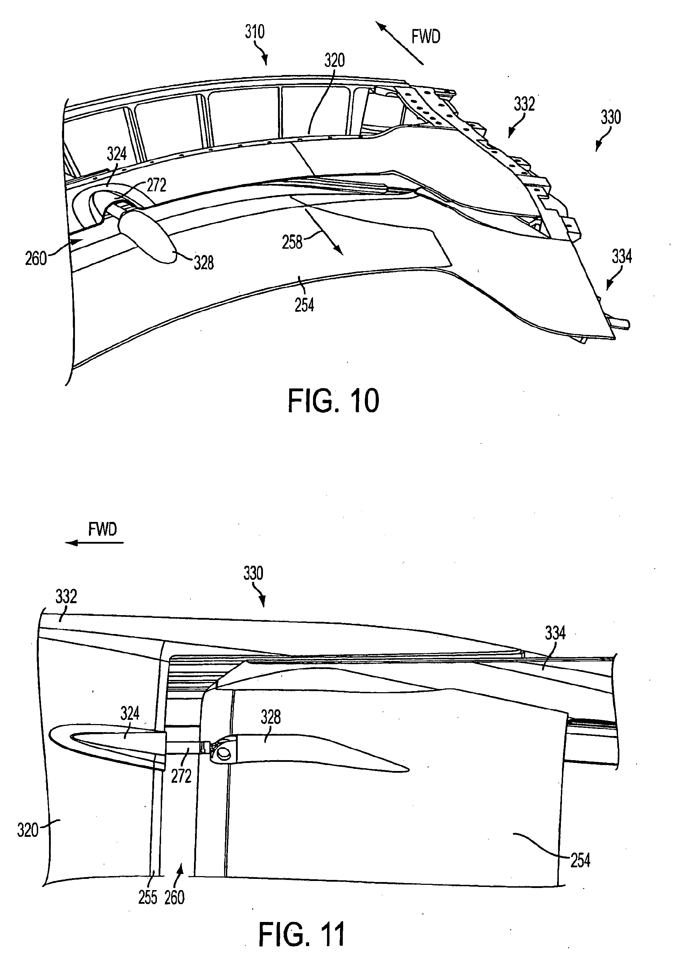

As shown in **FIG. 10****,** each end of each nozzle section **254** can terminate at a split beavertail fairing **330.** As shown in **FIGS. 10** and **11****,** each end of an outer fairing **320** of a nacelle can include an upstream portion **332** of a split beavertail fairing **330,** and each end of a translating nozzle section **254** can include a downstream portion **334** of the split beavertail fairing **330.** Rearward translation of the nozzle section **254** creates an upstream exit **260** between the nozzle section **254** and a trailing edge of the outer fairing **320,** and separates the upstream portion **332** and the downstream portion **334** of the split beavertail fairing **330,** thus forming an elongated gap **331.** As shown in **FIG. 11****,** a forward edge **255** of the nozzle section **254** can include an airfoil leading edge profile to facilitate smooth air flow through the upstream exit **260,** and to minimize flow disruption caused by the actuator shafts **272,** or the like.

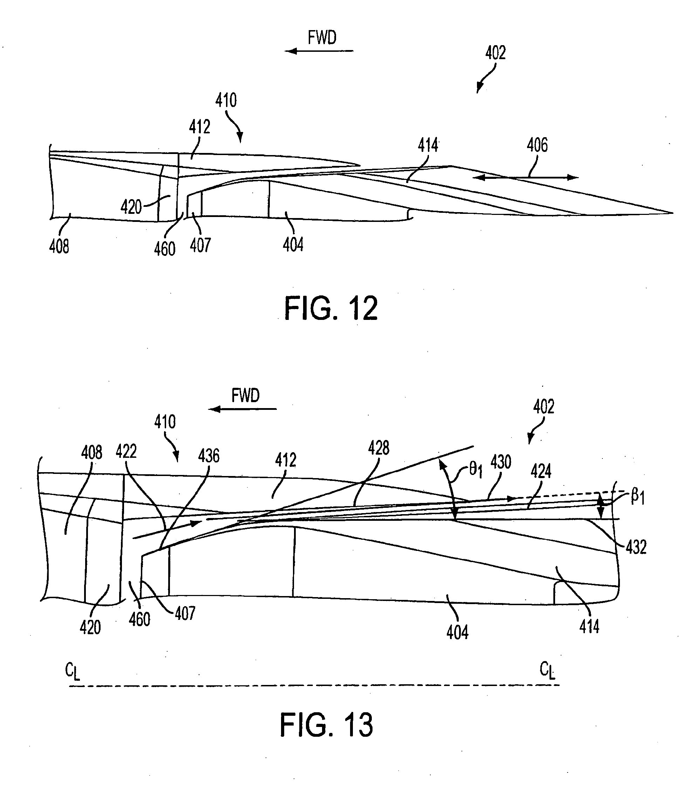

**FIGS. 12-13** show one embodiment of a split fairing **410** for use with a variable area nozzle assembly **402** mounted to a nacelle **18** in a manner similar to that described above, and as generally shown in **FIG. 1** or in **FIGS. 9A-9B****.** Such a split fairing **410** can be used in nacelle embodiments with or without cascade-type thrust reversers.

The variable area nozzle assembly **402** can include a translating nozzle having two nozzle sections, of which a portion of one nozzle section **404** is shown in **FIGS. 12-13****.** In **FIGS. 12-13****,** the nozzle section **404** is shown in an open or deployed position. As discussed above, a translating nozzle section **404** can be movably mounted to an aft end of a nacelle (as shown in **FIGS. 9A-9B****)** or to an aft end of a thrust reverser (as shown in **FIG. 1****).** As shown in **FIG. 12****,** the nacelle or thrust reverser to which the nozzle section **404** is mounted can include an outer fairing **408.** Selective translation of the translating nozzle section **404** in the direction of the bidirectional arrow **406** opens and closes an upstream exit **460** between the leading edge **407** of the nozzle segment **404** and a trailing edge **420** of the outer fairing **408.** The forward edge **407** of the nozzle segment **404** can include an airfoil leading edge profile to facilitate substantially smooth flow of the exiting bypass flow through the upstream exit **460.**

Opposed ends of the nozzle section **404** and each end of the outer fairing **408** can include a split beavertail fairing **410.** One embodiment of a split beavertail fairing **410** at one end of the nozzle section **404** is shown in **FIGS. 12-13****.** In the embodiment shown in **FIGS. 12-13****,** each end of the outer fairing **408** includes an upstream beavertail fairing portion **412,** and each end of the nozzle section **404** includes a downstream beavertail fairing portion **414.** The beavertail split fairing **410** helps to facilitate smooth air flow in the vicinity of the mechanisms that movably support the ends of the nozzle section **404** on an engine, such as air flow in the vicinity of an elongated guide structure **102** like that shown in **FIGS.** 3 and 7, for example.

The general path of bypass flow that exits through the upstream exit **460** is indicated by arrow **422** in **FIG. 13****.** The flow direction **422** is substantially parallel to the leading edge **436** of the nozzle section **404.** In the immediate vicinity of the split beavertail fairing **410,** bypass flow exiting through the upstream exit **460** then passes between an upper surface **424** of the downstream beavertail fairing portion **414** and an opposed lower surface **428** of the upstream beavertail fairing portion **412.** The general direction of the bypass flow that passes between the opposed surfaces **424, 428** of the split beavertail fairing **410** is indicated in **FIG. 13** by arrow **430.** In **FIG. 13****,** the angle of the exiting bypass flow with respect to the engine's longitudinal centerline **C_{L}** and with respect to reference line **432** is indicated as angle β₁. Reference line **432** is parallel to the engine centerline.

As also shown in FIG. 13, a leading edge 436 of the translating nozzle section 404 can have an outward and rearward slope that is generally at an angle θ₁ relative to a reference line 432, which is parallel to the engine's longitudinal centerline. In one embodiment, the bypass flow exit angle β₁ in the vicinity of the split beavertail fairing 410 and the slope θ₁ of the leading edge 436 of the nozzle section 404 can be selected to minimize noise associated with the outward flow of air through and around the gap between the opposed surfaces 424, 428, and to enhance engine performance. In one embodiment, the angle of the slope θ₁ of the leading edge 436 is less than or equal to about 20 degrees, and the bypass flow exit angle β₁ in the vicinity of the split beavertail fairing 410 is less than or equal to about 10 degrees. In this embodiment, the difference between the angles β₁ and θ₁ is equal to about 10 degrees.

A leading edge angle θ₁ of less than or equal to about 20 degrees and an exit angle β₁ equal to less than or equal to 10 degrees alters the direction of exiting bypass flow as the flow passes through the upstream exit 460 between the upstream and downstream beavertail fairing portions 412, 414 of the split fairing 410 in a manner that minimizes the degree of turbulent air flow in the immediate vicinity of the split beavertail , fairing 410. In addition, the exit angle β₁ can be sufficiently shallow (i.e. about 10 degrees or less) to minimize the cross flow angle between the exiting bypass flow 430 and rearward external air flow just outside of the upstream exit 460. As a result, noise can be minimized, and engine performance can be enhanced. The angle of inclination of the upper surface 424 of the downstream beavertail fairing portion 414 can be at an angle that is less than or equal to about 10 degrees with respect to the engine centerline CL In order to achieve a desired exit angle β₁. In addition, the opposed lower surface 428 of the upstream beavertail fairing portion 412 can be disposed substantially parallel to the upper surface 424 of the downstream beavertail fairing portion 414.

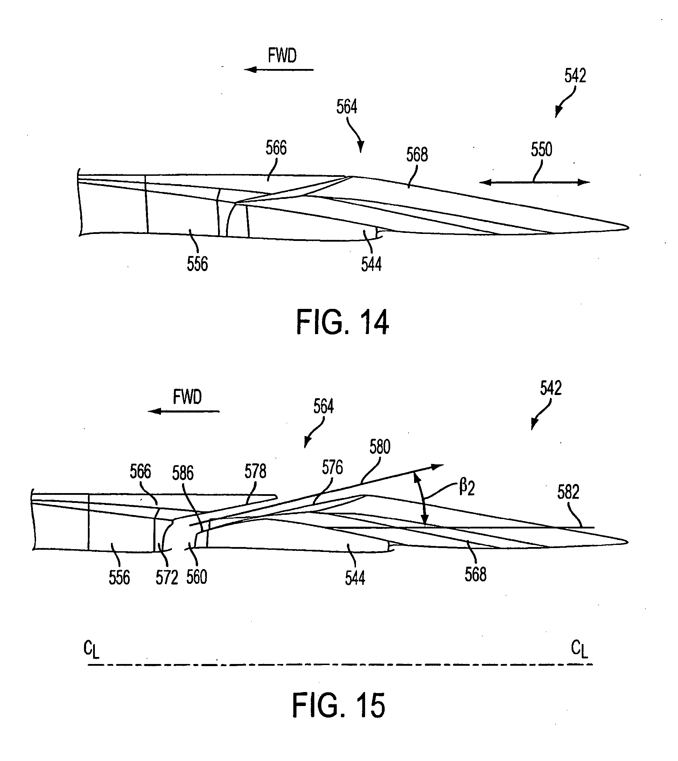

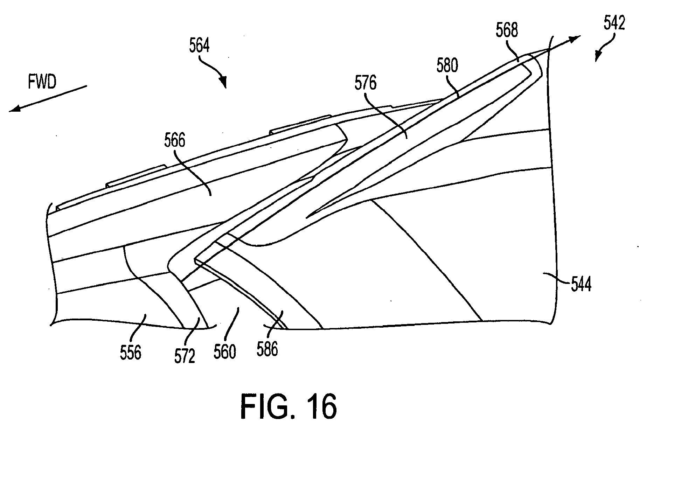

FIGS. 14-16 show another arrangement of a split beavertail fairing 564 for use with a variable area fan nozzle assembly 542 like that described above. Again, the variable area fan nozzle assembly **542** can be mounted to a nacelle or to a cascade-type thrust reverser, such as generally shown in **FIG. 1** and **FIGS. 9A****-9B,** respectively.

As shown in **FIGS. 14-16****,** each end of a translating nozzle segment **544** of a variable area fan nozzle assembly **542** can terminate at a beavertail split fairing **564** (a typical end of one translating nozzle section **544** is shown in **FIGS. 14-16****).** The beavertail split fairings **564** help to facilitate smooth air flow in the vicinity of the mechanisms that movably support the ends of the translating nozzle sections on an engine, such as in the vicinity of the elongated guide structures **102** shown in **FIGS. 3-5****,** for example. As shown in **FIGS. 14-16****,** each end of a cooperating outer fairing **556** of a nacelle or thrust reverser sleeve can include an upstream beavertail fairing portion **566,** and each end of the translating nozzle section **544** can include a cooperating downstream beavertail fairing portion **568.** As shown in **FIGS. 15-16****,** aftward translation of the nozzle section **544** from the stowed position shown in **FIG. 14** opens an upstream exit **560** between the leading edge **586** of nozzle section **544** and the aft edge **572** of the associated outer fairing **556.** In **FIGS. 15-16****,** the forward edge **586** of the nozzle segment **544** can include an airfoil leading edge profile to facilitate the flow of air through the upstream exit **560,** and to minimize flow disruption caused by actuators or other objects that may be disposed within or across the upstream exit **560.**

The general direction of the flow of air exiting the upstream exit **560** from a bypass duct is indicated by directional arrow **580** in **FIG. 15****.** This flow direction **580** is substantially parallel to the angle of inclination of the leading edge **586** of the nozzle segment **544.** In the immediate vicinity of the split beavertail fairing **564,** the flow exits the upstream exit **560** in a direction that is generally dictated by an upper surface **576** of the downstream beavertail fairing portion **568** and an opposed lower surface **578** of the upstream beavertail fairing portion **566.** The direction of that portion of the exiting bypass flow that passes between the surfaces **576, 578** of the split beavertail fairing **564** is also generally indicated by arrow **580.** In **FIG. 15****,** the exit angle of exiting bypass flow passing through the upstream exit **560** in the vicinity of the split beavertail fairing **564** is indicated as angle β₂, which is measured with respect to the engine's longitudinal centerline **C_{L}**, and with respect to reference line **582** (which is parallel to the engine centerline). The leading edge **586** of the translating nozzle section **544** also slopes at an angle β**₂** with respect to reference line **582** and to the engine centerline. In other words, the direction **580** of the flow passing between the surfaces **576, 578** of the split beavertail fairing **564** is substantially parallel to the leading edge **586** of the nozzle section **544.** Preferably, any difference in the flow direction **580** and the angle of slope β**₂** of the leading edge **586** is less than about 5 degrees, and most preferably about zero. The exit angle and the angle of slope β**₂** of the leading edge **586** of the nozzle section **544** can be selected to minimize turbulence in the area of the beavertail fairing **564,** thereby minimizing noise associated with the variable area fan nozzle assembly **502.**

A leading edge angle β**₂** and a substantially equal exit angle of less than about 15 degrees redirects the bleed flow as it passes through the upstream exit **570** in the vicinity of the split beavertail fairings **564** in a manner that minimizes turbulence, and thus noise. A shallow exit angle β**₂** also minimizes the angle of cross flow between the exiting bypass flow and external air flow in the vicinity of the upstream exit **560.** Thus, engine noise can be minimized, and engine performance can be enhanced. The inclination of the upper surface **576** of the downstream beavertail fairing portion **568** can be at an angle of less than about 15 degrees with respect to the engine centerline **C_{L}** in order to obtain a desired exit angle β **₂**.

Persons of ordinary skill in the art will understand that while the invention has been described in terms of various embodiments and various aspects and features, certain modifications, variations, changes and additions can be made to the described embodiments without departing from the scope of the invention as defined in the appended claims.

## Claims

1. A nacelle assembly (18) for a turbofan aircraft engine having an engine centerline, the nacelle assembly (18) comprising:
(a) a stationary forward nacelle portion having an outer fairing (408) and a trailing edge (420);
(b) a translatable variable area fan nozzle comprising two or more nozzle segments, each nozzle segment (404) having first and second opposed ends and a leading edge (436) that outwardly and rearwardly slopes at a first angle with respect to the engine centerline, the fan nozzle being selectively movable between a stowed position and one or more deployed positions, wherein in the deployed position, an upstream bypass flow exit (460) is formed between the trailing edge (420) and the leading edge (436); and
(c) a split beavertail fairing (410) comprising an upstream fairing portion (412) on the outer fairing (408) and a downstream fairing portion (414) on at least one end of at least one nozzle segment (404);
(d) wherein when the at least one nozzle segment (404) is in the stowed position, the upstream fairing portion (412) and the downstream fairing portion (414) combine to form a substantially continuous outer surface extending between the outer fairing (408) and the at least one nozzle segment (404); and
(e) wherein when the at least one nozzle segment (404) is in the deployed position, the upstream fairing portion (412) and the downstream fairing portion (414) define a substantially rearwardly extending elongated gap therebetween, **characterized by** the elongated gap being inclined with respect to the engine centerline (C₁) at a second angle (β₁), which is different to the first angle (θ₁).

2. A nacelle assembly according to claim 1 wherein the upstream fairing portion (412) includes a substantially flat lower surface (428) and the downstream fairing portion (414) includes a substantially flat upper surface (424), and wherein in the deployed position, the elongated gap is disposed between the lower surface and the upper surface.

3. A nacelle assembly (18) according to claim 2 wherein the lower surface and the upper surface are substantially parallel to each other.

4. A nacelle assembly (18) for a turbofan aircraft engine having a centerline, the nacelle assembly (18) comprising:
(a) a stationary forward nacelle portion;
(b) a thrust reverser (80) comprising a translatable sleeve (82, 84) having an outer fairing and a trailing edge, the translatable sleeve (82, 84) being movably disposed aft of the stationary forward nacelle portion;
(c) a translatable variable area fan nozzle comprising two or more nozzle segments, each nozzle segment (404) having first and second opposed ends and a leading edge (436) that outwardly and rearwardly slopes at a first angle (θ₁) with respect to the engine centerline, the fan nozzle being selectively movable between a stowed position and one or more deployed positions, wherein in the deployed position, an upstream bypass flow exit (460) is formed between the trailing edge (420) and the leading edge (436); and
(d) a split beavertail fairing (410) comprising an upstream fairing portion (412) on the outer fairing (408) and a downstream fairing portion (414) on at least one end of at least one nozzle segment (404);
(e) wherein when the at least one nozzle segment (404) is in the stowed position, the upstream fairing portion (412) and the downstream fairing portion (414) combine to form a substantially continuous outer surface extending between the outer fairing (408) and the at least one nozzle segment (404); and
(f) wherein when the at least one nozzle segment (404) is in the deployed position, the upstream fairing portion (412) and the downstream fairing portion (414) define a substantially rearwardly extending elongated gap therebetween, **characterized by** the elongated gap being inclined with respect to the engine centerline (C₁) at a second angle (β₁), which is different to the first angle (θ₁).

5. A nacelle assembly (18) according to claim 1 or 4 wherein the first angle (θ₁) is less than or equal to about 20 degrees, and the second angle (β₁) is less than or equal to about 10 degrees.

6. A nacelle assembly according to claim 1 or 4 wherein the difference between the first angle and the second angle is about 10 degrees.

7. A nacelle assembly (18) according to claim 1 or 4 wherein the translatable variable area fan nozzle comprises a first nozzle segment (404) and a second nozzle segment (404), and wherein the first and second nozzle segments are substantially mirror images of each other.

8. A nacelle assembly (18) according to claim 1 or 4 further comprising a guide mechanism (102) that movably connects the at least one end of the at least one nozzle segment (404) to the forward nacelle portion, and wherein when the at least one nozzle segment (404) is in the stowed position, the upstream fairing portion (412) and the downstream fairing portion (414) combine to cover a substantial portion of the guide mechanism (102).

## Patentansprüche

1. Gondelanordnung (18) für ein Mantelstromtriebwerk von Flugzeugen, welches eine Triebwerksmittellinie aufweist, die Gondelanordnung (18) umfassend:
(a) einen feststehenden vorderen Gondelabschnitt, der eine äußere Verkleidung (408) und eine Hinterkante (420) aufweist;
(b) eine translatorisch bewegliche flächenvariable Bläserdüse, die zwei oder mehrere Düsensegmente umfasst, wobei jedes Düsensegment (404) erste und zweite gegenüberliegende Enden und eine Vorderkante (436) aufweist, die in einem ersten Winkel in Bezug auf die Triebwerksmittellinie nach außen und nach hinten geneigt ist, wobei die Bläserdüse wahlweise zwischen einer Stauposition und einer oder mehreren entfalteten Positionen bewegbar ist, wobei in der entfalteten Position ein vorgeschalteter Nebenstromkanalausgang (460) zwischen der Hinterkante (420) und der Vorderkante (436) gebildet wird; und
(c) eine geteilte Biberschwanz-Verkleidung (410), umfassend einen vorgeschalteten Verkleidungsabschnitt (412) auf der äußeren Verkleidung (408) und einen nachgeschalteten Verkleidungsabschnitt (414) auf mindestens einem Ende des mindestens einen Düsensegments (404);
(d) wobei, wenn das mindestens eine Düsensegment (404) sich in der Stauposition befindet, der vorgeschaltete Verkleidungsabschnitt (412) und der nachgeschaltete Verkleidungsabschnitt (414) sich verbinden, um eine im Wesentlichen durchgehende Außenfläche zu bilden, die sich zwischen der äußeren Verkleidung (408) und dem mindestens einen Düsensegment (404) erstreckt; und
(e) wobei, wenn das mindestens eine Düsensegment (404) sich in der entfalteten Position befindet, der vorgeschaltete Verkleidungsabschnitt (412) und der nachgeschaltete Verkleidungsabschnitt (414) einen im Wesentlichen sich nach hinten erstreckenden, dazwischen liegenden länglichen Spalt definieren, **dadurch gekennzeichnet, dass** der längliche Spalt in Bezug auf die Triebwerksmittellinie (C₁) in einem zweiten Winkel (β₁), der sich von dem ersten Winkel (θ₁) unterscheidet, geneigt ist.

2. Gondelanordnung nach Anspruch 1, wobei der vorgeschaltete Verkleidungsabschnitt (412) eine im Wesentlichen flache untere Fläche (428) aufweist und der nachgeschaltete Verkleidungsabschnitt (414) eine im Wesentliche flache obere Fläche (424) aufweist, und wobei in der entfalteten Position der längliche Spalt zwischen der unteren Fläche und der oberen Fläche angeordnet ist.

3. Gondelanordnung (18) nach Anspruch 2, wobei die untere Fläche und die obere Fläche im Wesentlichen parallel zueinander verlaufen.

4. Gondelanordnung (18) für ein Turbofan-Flugtriebwerk, das eine Mittellinie aufweist, die Gondelanordnung (18) umfassend:
(a) einen feststehenden vorderen Gondelabschnitt;
(b) eine Schubumkehmowichtung (80), umfassend eine translatorisch bewegliche Hülse (82, 84) umfasst, welche eine äußere Verkleidung und eine Hinterkante aufweist, wobei die translatorisch bewegliche Hülse (82, 84) beweglich hinter dem stehenden vorderen Gondelabschnitt angeordnet ist;
(c) eine translatorisch bewegliche flächenvariable Bläserdüse, die zwei oder mehrere Düsensegmente umfasst, wobei jedes Düsensegment (404) erste und zweite gegenüberliegende Enden und eine Vorderkante (436) aufweist, die in einem ersten Winkel (θ₁) in Bezug auf die Triebwerksmittellinie nach außen und nach hinten geneigt ist, wobei die Bläserdüse wahlweise zwischen einer Stauposition und einer oder mehreren entfalteten Positionen bewegbar ist, wobei in der entfalteten Position ein vorgeschalteter Nebenstromkanalausgang (460) zwischen der Hinterkante (420) und der Vorderkante (436) gebildet wird; und
(d) eine geteilte Biberschwanz-Verkleidung (410), umfassend einen vorgeschalteten Verkleidungsabschnitt (412) auf der äußeren Verkleidung (408) und einen nachgeschalteten Verkleidungsabschnitt (414) auf mindestens einem Ende des mindestens einen Düsensegments (404);
(e) wobei, wenn das mindestens eine Düsensegment (404) sich in der Stauposition befindet, der vorgeschaltete Verkleidungsabschnitt (412) und der nachgeschaltete Verkleidungsabschnitt (414) sich verbinden, um eine im Wesentlichen durchgehende Außenfläche zu bilden, die sich zwischen der äußeren Verkleidung (408) und dem mindestens einen Düsensegment (404) erstreckt; und
(f) wobei, wenn das mindestens eine Düsensegment (404) sich in der entfalteten Position befindet, der vorgeschaltete Verkleidungsabschnitt (412) und der nachgeschaltete Verkleidungsabschnitt (414) einen im Wesentlichen sich nach hinten erstreckenden, dazwischen liegenden länglichen Spalt definieren, **dadurch gekennzeichnet, dass** der längliche Spalt in Bezug auf die Triebwerksmittellinie (C₁) in einem zweiten Winkel (β₁), der sich von dem ersten Winkel (θ₁) unterscheidet, geneigt ist.

5. Gondelanordnung (18) nach Anspruch 1 oder 4, wobei der erste Winkel (θ₁) kleiner oder gleich etwa 20 Grad beträgt und der zweite Winkel (β₁) kleiner oder gleich etwa 10 Grad beträgt.

6. Gondelanordnung nach Anspruch 1 oder 4, wobei der Unterschied zwischen dem ersten Winkel und dem zweiten Winkel etwa 10 Grad beträgt.

7. Gondelanordnung (18) nach Anspruch 1 oder 4, wobei die translatorisch bewegliche flächenvariable Bläserdüse ein erstes Düsensegment (404) und ein zweites Düsensegment (404) umfasst und wobei die ersten und zweiten Düsensegmente im Wesentlichen Spiegelbilder voneinander sind.

8. Gondelanordnung (18) nach Anspruch 1 oder 4, ferner umfassend einen Führungsmechanismus (102), der das mindestens eine Ende des mindestens einen Düsensegments (404) mit dem vorderen Gondelabschnitt beweglich verbindet, und wobei, wenn das mindestens eine Düsensegment (404) sich in der Stauposition befindet, der vorgeschaltete Verkleidungsabschnitt (412) und der nachgeschaltete Verkleidungsabschnitt (414) sich verbinden, um einen wesentlichen Abschnitt des Führungsmechanismus (102)abzudecken.

## Revendications

1. Ensemble de nacelle (18) pour un moteur d'avion à turboréacteur à double flux présentant une ligne médiane de moteur, l'ensemble de nacelle (18) comprenant :
(a) une partie de nacelle avant stationnaire présentant un carénage extérieur (408) et un bord de fuite (420) ;
(b) une buse de réacteur à zone variable translatable comprenant deux ou plus segments de buse, chaque segment de buse (404) présentant des première et seconde extrémités opposées et un bord d'attaque (436) qui s'incline vers l'extérieur et l'arrière selon un premier angle par rapport à la ligne médiane de moteur, la buse de réacteur étant mobile sélectivement entre une position rangée et une ou plusieurs positions déployées, dans lequel dans la position déployée, une sortie de flux de dérivation en amont (460) est formée entre le bord de fuite (420) et le bord d'attaque (436) ; et
(c) un carénage en forme de queue de castor fendue (410) comprenant une partie de carénage en amont (412) sur le carénage extérieur (408) et une partie de carénage en aval (414) sur au moins une extrémité d'au moins un segment de buse (404) ;
(d) dans lequel lorsque l'au moins un segment de buse (404) est dans la position rangée, la partie de carénage en amont (412) et la partie de carénage en aval (414) se combinent pour former une surface extérieure sensiblement continue s'étendant entre le carénage extérieur (408) et l'au moins un segment de buse (404) ; et
(e) dans lequel lorsque l'au moins un segment de buse (404) est dans la position déployée, la partie de carénage en amont (412) et la partie de carénage en aval (414) définissent une fente allongée s'étendant sensiblement vers l'arrière entre elles, **caractérisé par** la fente allongée inclinée par rapport à la ligne médiane de moteur (C₁) selon un second angle (β₁) qui est différent du premier angle (θ₁).

2. Ensemble de nacelle selon la revendication 1, dans lequel la partie de carénage en amont (412) comprend une surface inférieure sensiblement plate (428) et la partie de carénage en aval (414) comprend une surface supérieure sensiblement plate (424) et dans lequel dans la position déployée, la fente allongée est agencée entre la surface inférieure et la surface supérieure.

3. Ensemble de nacelle (18) selon la revendication 2, dans lequel la surface inférieure et la surface supérieure sont sensiblement parallèles l'une à l'autre.

4. Ensemble de nacelle (18) pour un moteur d'avion à turboréacteur à double flux présentant une ligne médiane, l'ensemble de nacelle (18) comprenant :
(a) une partie de nacelle avant stationnaire ;
(b) un inverseur de poussée (80) comprenant un manchon translatable (82, 84) présentant un carénage extérieur et un bord de fuite, le manchon translatable (82, 84) étant agencé de manière mobile à l'arrière de la partie de nacelle avant stationnaire ;
(c) une buse de réacteur à zone variable translatable comprenant deux segments de buse, ou plus, chaque segment de buse (404) présentant des première et seconde extrémités opposées et un bord d'attaque (436) qui s'incline vers l'extérieur et l'arrière selon un premier angle (θ₁) par rapport à la ligne médiane de moteur, la buse de réacteur étant mobile sélectivement entre une position rangée et une ou plusieurs positions déployées, dans lequel dans la position déployée, une sortie de flux de dérivation en aval (460) est formée entre le bord de fuite (420) et le bord d'attaque (436) ; et
(d) un carénage en queue de castor fendue (410) comprenant une partie de carénage en amont (412) sur le carénage extérieur (408) et une partie de carénage en aval (414) sur au moins une extrémité d'au moins un segment de buse (404) ;
(e) dans lequel lorsque l'au moins un segment de buse (404) est dans la position rangée, la partie de carénage en amont (412) et la partie de carénage en aval (414) se combinent pour former une surface extérieure sensiblement continue s'étendant entre le carénage extérieur (408) et l'au moins un segment de buse (404) ; et
(f) dans lequel lorsque l'au moins un segment de buse (404) est dans la position déployée, la partie de carénage en amont (412) et la partie de carénage en aval (414) définissent une fente allongée s'étendant sensiblement vers l'arrière entre elles, **caractérisé par** la fente allongée inclinée par rapport à la ligne médiane de moteur (C₁) selon un second angle (β₁) qui est différent du premier angle (θ₁).

5. Ensemble de nacelle (18) selon la revendication 1 ou 4, dans lequel le premier angle (θ₁) est inférieur ou égal à environ 20 degrés, et le second angle (β₁) est inférieur ou égal à environ 10 degrés.

6. Ensemble de nacelle selon la revendication 1 ou 4, dans lequel la différence entre le premier angle et le second angle est d'environ 10 degrés.

7. Ensemble de nacelle (18) selon la revendication 1 ou 4, dans lequel la buse de réacteur à zone variable translatable comprend un premier segment de buse (404) et un second segment de buse (404), et dans lequel les premier et second segments de buse sont sensiblement des images réfléchies l'un de l'autre.

8. Ensemble de nacelle (18) selon la revendication 1 ou 4, comprenant en outre un mécanisme de guidage (102) qui relie de manière mobile l'au moins une extrémité de l'au moins un segment de buse (404) à la partie de nacelle avant, et dans lequel lorsque l'au moins un segment de buse (404) est dans la position rangée, la partie de carénage en amont (412) et la partie de carénage en aval (414) se combinent pour couvrir une partie sensible du mécanisme de guidage (102).
